Europäisches Patentamt

**European Patent Office**

**Office européen des brevets**

(11) Numéro de publication: **0 113 262**
**B1**

# (12) FASCICULE DE BREVET EUROPÉEN

(45) Date de publication du fascicule du brevet:
21.09.88

(21) Numéro de dépôt: **83402298.0**

(22) Date de dépôt: **29.11.83**

(51) Int. Cl.⁴: **G 05 D 23/20**

(54) **Procédé et dispositif de régulation du chauffage de locaux.**

(30) Priorité: **30.11.82 FR 8220074**

(43) Date de publication de la demande:
**11.07.84 Bulletin 84/28**

(45) Mention de la délivrance du brevet:
**21.09.88 Bulletin 88/38**

(84) Etats contractants désignés:
**BE CH DE FR GB IT LI NL SE**

(56) Documents cité:
**EP-A-0 049 215**
**EP-A-0 057 574**
**EP-A-0 060 801**
**EP-A-0 070 471**
**EP-A-0 076 398**
**FR-A-2 375 554**
**FR-A-2 436 337**
**GB-A-573 028**

**TECHNIQUES CEM, no. 114, juin 1982, Paris (FR), R.
BARDOT:"Un calculateur configurable pour la
conduite du chauffage des immeubles", pages 22-29**

(73) Titulaire: **ELECTRICITE DE FRANCE Service
National, 2, rue Louis Murat, F-75008 Paris (FR)**

(72) Inventeur: **Pichot, Jacky, 4 rue Haute La Grande
Paroisse, F-77130 Montereau (FR)**

(74) Mandataire: **Martin, Jean- Jacques, Cabinet
REGIMBEAU 26, Avenue Kléber, F-75116 Paris (FR)**

### Description

La présente invention concerne un procédé et un dispositif de régulation du chauffage de locaux.

Pour effectuer une telle régulation, on se base dans l'art antérieur soit sur la température extérieure (régulation en boucle ouverte), soit sur la température ambiante à l'intérieur des locaux (régulation en boucle fermée), en comparant cette température extérieure ou intérieure à une température de consigne, et en commandant le chauffage en fonction de cette comparaison.

Selon une technique plus élaborée mais également connue, on associe purement et simplement ces deux régulations, en pratiquant une régulation basée sur la température extérieure et en la limitant par un thermostat d'ambiance.

Cette association offre comme principal avantage d'éviter les surchauf fes des logements, en conservant naturellement les avantages respectifs de la régulation en boucle ouverte et de la régulation en boucle fermée, mais, selon la température intérieure désirée ou température de consigne et les réglages initialement effectués, la régulation s'effectue en fait soit sur la température ambiante, soit sur la température extérieure, auquel cas les besoins des utilisateurs risquent de ne pas être satisfaits, d'où une sensation d'inconfort.

D'autres dispositifs de régulation sont décrits dans les demandes de brevet Européennes EP-A-49 215 et EP-A-60 801. Toutefois, ces dispositifs, qui opèrent une régulation en température, s'avèrent particulièrement complexes puisqu'ils sont sensibles à fois à la température intérieure des locaux, à la température extérieure, à une température de consigne et à la température vraie du fluide de chauffage traversant les générateurs de chauffage.

Un autre type de dispositif de régulation est également évoqué dans la demande de brevet Française FR-A-2 375 554. Toutefois, cette demande se contente de suggérer des principes de régulation, sans préciser dans le détail les lois ou relations reliant les différents paramètres, et sur cette base l'homme de l'art ne peut concevoir un dispositif de régulation fiable et optimisé.

On notera également que la loi d'influence de la température intérieure sur la régulation n'est pas précisée, bien que la demande semble suggérer une régulation du type tout ou rien. De plus la comparaison des températures extérieure et intérieure avec des valeurs différentes respectives, température minimale dépendant des conditions climatiques d'une part, consigne affichée par l'occupant de chaque logement d'autre part, ne permet pas d'obtenir une régulation optimale.

Un autre type de dispositif de régulation est également évoqué dans le document FR-A-2 436 337. Ce document concerne un dispositif de régulation de la temperature d'un local qui comprend une sonde Si mesurant la température intérieure, une sonde Se mesurant la température extérieure, un organe définissant une température de consigne, un organe de correction du type amplificateur opérationnel recevant en entrée d'une part, le signal délivré par la sonde Si d'autre part, la température de consigne, et enfin, un comparateur qui reçoit en entrée d'une part, la température de consigne, d'autre part, une sommation du signal délivré par la sonde Se la sortie de l'organe de correction et un signal en créneaux. Le comparateur assure une commande par tout ou rien de l'appareil de chauffage, il délivre une impulsion de sortie rectangulaire dont la durée est le temps pendant lequel la température de consigne est supérieure à la somme des signaux appliqués sur la seconde entrée dudit comparateur. Ce dispositif de régulation ne donne pas pleinement satisfaction.

Pour remédier à ces inconvénients, la présente invention propose un nouveau processus de régulation associant une régulation sur la température extérieure et une régulation sur la température ambiante, de manière continue sur toute la plage de fonctionnement, c'est-à-dire notamment quelle que soit la température extérieure pour concilier les impératifs d'économie et de confort.

A cet effet, la présente invention propose:

i) de déterminer à chaque instant la puissance de base pb à mettre en oeuvre pour compenser les déperditions présumées des locaux sur la base de la relation

$P_b = GV (T_c - T_{ext})$, dans laquelle

$T_c$ représente une température de consigne, G représente le coefficient de déperdition volumique desdits locaux, V représente le volume de ces derniers, et $T_{ext}$ la température extérieure,

ii) de déterminer une estimation de la correction $\Delta P$ à apporter à cette puissance de base $P_b$ pour satisfaire les besoins des locaux, c'est-à-dire pour amener la température intérieure $T_a$ au moins sensiblement à la température de consigne $T_c$, sur la base de la relation

$\Delta P = K (T_c - T_a)$, dans laquelle

K représente une constante et $T_c$ représente ladite valeur de consigne,

iii) de générer un signal de commande représentatif de la somme algébrique ($P_m = P_b + \Delta P$) de la puissance de base et de ladite correction, et

iv) de commander l'installation de chauffage à l'aide du signal de commande pour imposer à celle-ci la fourniture aux locaux, d'une puissance égale à ladite somme algébrique.

La régulation proposée par la présente invention étant une régulation en puissance, on remarquera que, à la différence des processus de régulation complexes décrits dans les demandes de brevet Européennes précitées, il n'est pas nécessaire de mesurer la température du fluide de chauffage, et ledit signal de commande est directement utilisable pour la régulation de l'installation de chauffage.

Par ailleurs, on remarquera que le procédé de régulation conforme à la présente invention permet d' intégrer automatiquement les apports gratuits d'énergie.

De préférence, on limite en valeur absolue la valeur de la correction, de telle sorte qu'une augmentation brutale des déperditions du logement, consécutive par exemple à l'ouverture d'une fenêtre, n'entraîne pas de surconsommation excessive d'énergie pour une température extérieure donnée, la surconsommation maximale envisageable est limitée au maximum prédéterminé de correction, et la régulation joue alors le rôle de limitateur de consommation d'énergie.

En outre, comme il apparaîtra plus loin, des erreurs de réglage peuvent être réalisées dans une certaine mesure sans induire de gêne pour les utilisateurs et, sur la régulation selon invention ,peut même être greffé un algorithme d'auto-réglage supprimant toute intervention manuelle des utilisateurs et évitant ainsi les erreurs évoquées ci-dessus.

Pour cela, avantageusement, la valeur de la température extérieure pour laquelle la puissance de base $P_b$ maximale, correspondant à la puissance totale de l'installation de chauffage, est imposée afin de maintenir la température de consigne $T_c$ à l'intérieur des locaux, et par le fait même le coefficient de proportionnalité utilisé pour déterminer la puissance de base requise, est incrémentée périodiquement proportionnellement à une intégration sur une période prédéterminée, de l'écart $(T_c - T_a)$ existant entre la température de consigne $T_c$ et la température $T_a$ intérieure aux locaux.

Selon une variante préférentielle de l'invention, le signal $P_m$ de commande appliqué à l'installation de chauffage et représentatif de la puissance de chauffage requise est en outre corrigé par une correction auxiliaire $(Y = \frac{1}{T_i} \int (T_c - T_a) \, dt)$ proportionnelle à l'intégration, sur une période prédéterminée $T_i$, de l'écart $(T_c - T_a)$ existant entre la température de consigne et la température intérieure aux locaux.

De façon préférentielle, la température de consigne $T_c$ est modulée automatiquement en fonction d'une programmation horaire.

Selon une autre caractéristique avantageuse de l'invention, le signal de commande $P_m$ évoluant en permanence en fonction des températures extérieure $T_{ext}$ et intérieure $T_a$ instantanées est échantillonné avant d'être appliqué à l'installation de chauffage.

Plus précisément, de préférence, pour chaque période d'échantillonnage, le signal de commande pm est transformé en un signal de commande auxiliaire tout ou rien dont la durée active est proportionnelle à l'amplitude du signal de commande, ledit signal de commande auxiliaire étant appliqué à l'installation de chauffage.

Plus précisément encore, de préférence, pour la régulation d'une installation de chauffage comportant plusieurs générateurs de chauffage élémentaires, la présente invention propose de pratiquer une commande étagée de ces générateurs élémentaires en déterminant à partir du signal de commande le nombre maximal de générateurs à mettre en service pendant une période d'échantillonnage donnée et en modulant le temps de mise en service du dernier générateur pour égaler la puissance requise.

La régulation conforme à la présente invention peut être utilisée, avec tous ses avantages, quel que soit le système de chauffage et le type d'énergie calorifique utilisé pour celui-ci, mais elle se révèle particulièrement adaptée au cas des systèmes de chauffage central à circulation d'eau chaude dans un circuit comportant, outre des radiateurs, une chaudière munie de deux sources d'énergie calorifique susceptibles d'être utilisées séparément ou simultanément, à raison d'une source de chauffage principal et d'une source de réchauffage; on peut alors avantageusement utiliser la régulation selon l'invention pour commander le fonctionnement de ces deux sources d'énergie.

Comme cela sera évoqué plus en détail par la suite, la présente invention concerne également un dispositif mettant en oeuvre le procédé ci-dessus précisé.

D'autres caractéristiques et avantages de l'invention ressortiront de la description ci-dessous, relative à des modes de mise en oeuvre non limitatifs, ainsi que des dessins annexés qui font partie intégrante de cette description.

La figure 1 est un schéma synoptique d'un régulateur mettant en oeuvre le procédé selon l'invention.

La figure 2 montre la courbe caractéristique de régulation de la puissance de base requise en fonction de la température extérieure mesurée.

La figure 3 montre la courbe caractéristique de régulation de la correction apportée à la puissance de base en fonction de la température intérieure mesurée ou température ambiante.

La figure 4 montre la courbe caractéristique de la combinaison des deux régulations, c'est-à-dire du régulateur de la figure 1.

La figure 5 illustre l'influence, sur cette courbe, de la variation de la température intérieure de consigne affichée' par l'utilisateur.

La figure 6 est un schéma d'une chaudière bi-énergie fonctionnant d'une part au combustible liquide et d'autre part à l'électricité.

La figure 7 illustre schématiquement une variante du régulateur conforme à un mode de mise en oeuvre préférentiel de la présente invention.

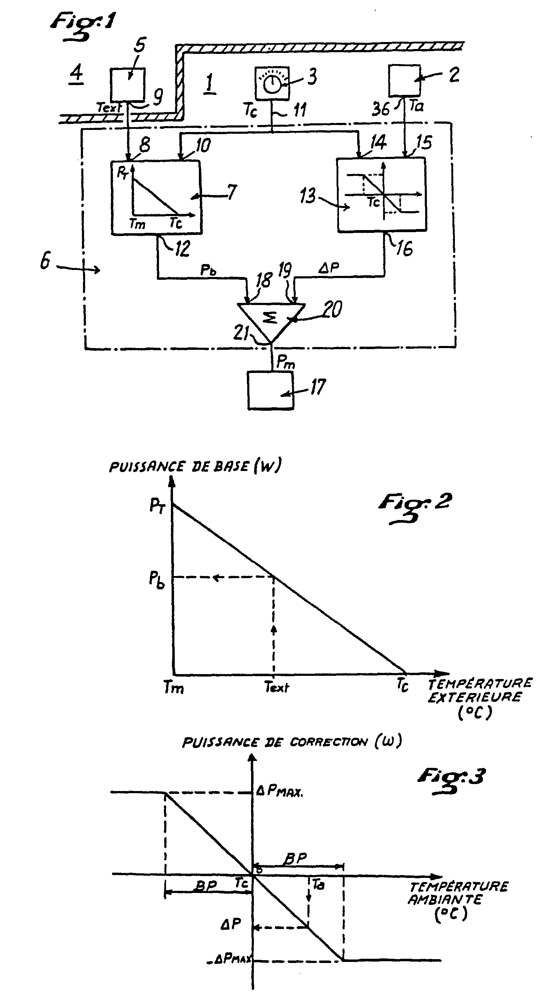

On se réfèrera en premier lieu à la figure 1, où l'on a désigné par 1 l'intérieur d'un local, dans lequel sont placés une sonde 2 mesurant à chaque instant la température intérieure ou température ambiante et un dispositif 3 permettant d'afficher une température intérieure de consigne, et par 4 l'extérieur de ce local, où est placée une sonde 5 mesurant à chaque instant la température extérieure.

A l'intérieur 1 du local est également placé le régulateur proprement dit 6, qui peut être placé dans un boîtier commun à la sonde 2 et au dispositif de consigne 3, ou encore être placé dans un boîtier distinct, et relié à la sonde intérieure 2 et au dispositif de consigne 3, ainsi qu'à la sonde extérieure 5, par des conducteurs électriques.

Le régulateur 6 comporte un premier régulateur proprotionnel 7 destiné à déterminer la puissance de base $P_b$ à mettre en oeuvre pour combattre les déperditions présumées du local.

A cet effet, ce régulateur proportionnel 7 présente une entrée de mesure 8 reliée par un conducteur électrique à la sortie 9 de la sonde extérieure 5 pour recevoir en continu de celle-ci un signal électrique représentatif à chaque instant de la température extérieure ; le régulateur proportionnel 7 comporte en outre une entrée de consigne 10 reliée par un conducteur électrique à la sortie 11 du dispositif de consigne 3 pour recevoir en continu de celui-ci un signal électrique représentatif de la température intérieure de consigne, c'est-à-dire de la température intérieure désirée par l'utilisateur.

Le régulateur proportionnel 7 comporte enfin une sortie 12 par laquelle il émet un signal électrique représentatif de la puissance de base à mettre en oeuvre pour combattre les déperditions présumées du local, selon la courbe caractéristique de la figure 2, correspondant à l'équation suivante:

$$P_b = GV (T_c - T_{ext})$$

où
$P_b$ = puissance de base en
$G$ = coefficient de déperdition volumique du logement en W/°C m³
$V$ = volume du local en m³
$T_c$ = température intérieure de consigne en °C
$T_{ext}$ = température extérieure mesurée en °C

Le régulateur 6 comporte en outre un deuxième régulateur proportionnel 13 qui présente une entrée de consigne 14 reliée électriquement, en parallèle avec l'entrée de consigne 10 du régulateur proportionnel 7, à la sortie 11 du dispositif de consigne 3 pour recevoir en permanence de celui-ci un signal électrique représentatif de la température de consigne, et une entrée de mesure 15 reliée électriquement à la sortie 36 de la sonde intérieure 2 pour recevoir en continu de celle-ci un signal électrique représentatif à chaque instant de la température intérieure du local.

Le régulateur proportionnel 13 comporte enfin une sortie 16, par laquelle il émet un signal électrique représentatif de la correction à apporter à la puissance de base calculée par le régulateur proportionnel 7 pour atteindre avec exactitude la puissance à mettre en oeuvre au niveau du dispositif de chauffage 17 pour satisfaire les besoins des locaux, c'est-à-dire pour que la température intérieure mesurée par la sonde 2 coïncide avec la température intérieure de consigne affichée sur le dispositif 3 dans toute la mesure du possible.

Pour des raisons de puissance maximale disponible du dispositif de chauffage 17, et/ou pour des raisons de limitation volontaire de cette puissance maximale disponible dans un but d'économie d'énergie (afin de limiter la prise en compte d'une baisse prononcée de la température intérieure $T_a$, due par exemple à l'ouverture prolongée d'une porte ou fenêtre du local), la valeur absolue de la correction déterminée par le régulateur proportionnel 13 est limitée à un maximum, et le régulateur proportionnel 13 présente la courbe caractéristique illustrée à la figure 3, correspondant à l'équation suivante:

$$\Delta P = K (T_c - T_a)$$

avec

$$\Delta P = \Delta P_{max} \text{ si } |\Delta P| \geqslant |\Delta P_{max}|$$

où
$\Delta P_{max}$ = correction maximale en plus ou moins apportée à la puissance de base en Watts
$BP$ = bande proportionnelle du régulateur en °C,
$K = \frac{|\Delta P_{max}|}{BP}$ = gain de régulateur en W/°C

Les sorties respectives 12 et 16 des deux régulateurs proportionnels 7 et 13 sont reliées à deux entrées respectives 18 et 19 d'un dispositif de sommation 20 qui effectue la somme algébrique des signaux émis respectivement en 12 et 16, pour émettre à sa sortie 21 un signal électrique représentatif de cette somme algébrique, c'est-à-dire de la puissance à mettre en oeuvre au niveau du système de chauffage 17 pour satisfaire les besoins des locaux ; ce signal de sortie répond à l'algorithme suivant:

$$P_m = GV (T_c - T_{ext}) + \Delta P$$

avec

$$\Delta P = |\frac{\Delta P_{max}}{BP}| (T_c - T_a) \text{ et } |\Delta P| \leqslant |\Delta P_{max}|$$

Ce signal est transmis par liaison électrique à un dispositif modulant en fonction de ce signal le fonctionnement du système de chauffage 17.

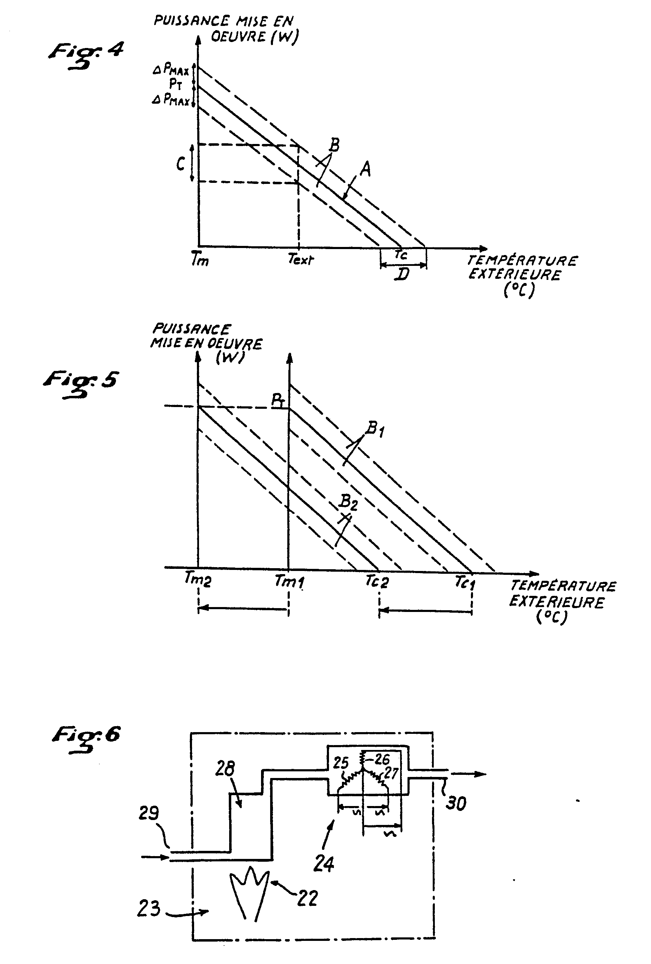

La figure 4 reprend en A la courbe des déperditions présumées du local, c'est-à-dire la courbe caractéristique du régulateur proportionnel 7 telle qu'elle ressort de la figure 1, et en B la bande de correction admissible par le jeu du régulateur proportionnel 13, d'où l'on déduit, pour une température extérieure donnée $T_{ext}$ la plage de variation possible c de la puissance totale $P_m$ mise en oeuvre par le système de chauffage 17 ; la figure 4 montre en outre, en D, la plage de correction possible, en température, du régulateur proportionnel 13 compte tenu du maximum imposé à la correction apportée par celui-ci à la puissance de base déterminée par le régulateur proportionnel 7.

La figure 5 montre l'influence d'une variation de la température de consigne, d'une valeur $T_c1$ à une valeur $T_c2$, sur la courbe caractéristique du régulateur 6.

Cette variation de la température de consigne entraîne, par son influence sur les deux régulateurs proportionnels 7 et 13, un décalage de la courbe caractéristique du régulateur 6 parallèle à l'axe des températures (portées en abscisse); l'origine $T_m$ des températures extérieures, qui constitue également l'origine de la courbe de la figure 2 et correspond à la température extérieure pour laquelle la puissance totale du système de chauffage est nécessaire pour maintenir la température de consigne $T_c$ à l'intérieur des locaux, subit un décalage identique à celui de la température de consigne, en passant de la valeur $T_m1$ à la valeur $T_m2$ où:

$$T_m2 - T_m1 = T_c2 - T_c1.$$

Ceci permet de garder les mêmes caractéristiques de régulation sur l'ensemble de la plage de réglage possible de la température de consigne $T_c$.

On notera que les seuls réglages à effectuer sur le système de régulation qui vient d'être décrit consistent en un réglage de température de consigne sur le dispositif 3, à la disposition de l'utilisateur, et le réglage de $T_m$, à effectuer par l'installateur en fonction de la puissance totale de chauffage disponible et des déperditions du local; on notera que cette température $T_m$ doit être différenciée de la température minimale de base, qui est une caractéristique du lieu d'implantation des locaux et non des déperditions de ceux-ci pour une puissance totale de chauffage donnée.

Il ressort de l'examen des figures 4 et 5 qu'un réglage défectueux de $T_m$ n'entraîne pas une sensation d'inconfort pour les usagers, si la courbe des déperditions du local reste dans la bande de correction admissible par le régulateur 6, c'est-à-dire dans la zone B de la figure 4, c'est-à-dire dans la zone B1 ou B2 de la figure 5 définie de façon analogue lorsque la valeur de la température de consigne est respectivement $T_c1$ ou $T_c2$.

Cependant, dans la mesure où le réglage de $T_m$ est difficile à apprécier car il varie en fonction du degré d'isolation des locaux, de leur implantation géographique, de leur orientation, du générateur de chaleur utilisé, etc. il est prévu, dans un mode de mise en oeuvre plus élaboré de la présente invention, un auto-réglage de $T_m$ selon un algorithme qui détermine la valeur optimale $T_m0$ de $T_m$ pour une valeur de référence $T_c0$, par exemple de 19°C, de la température de consigne sur l'ensemble de la plage de variation de la température extérieure du lieu considéré en minimisant la valeur de la puissance de correction moyenne (apportée par le régulateur proportionnel 13) ; cette valeur $T_m0$ est fixée une fois pour toute, sauf si la puissance de correction imposée par le régulateur proportionnel 13 dépasse une valeur limite, ce qui déclenche un nouveau réglage automatique de $T_m0$.

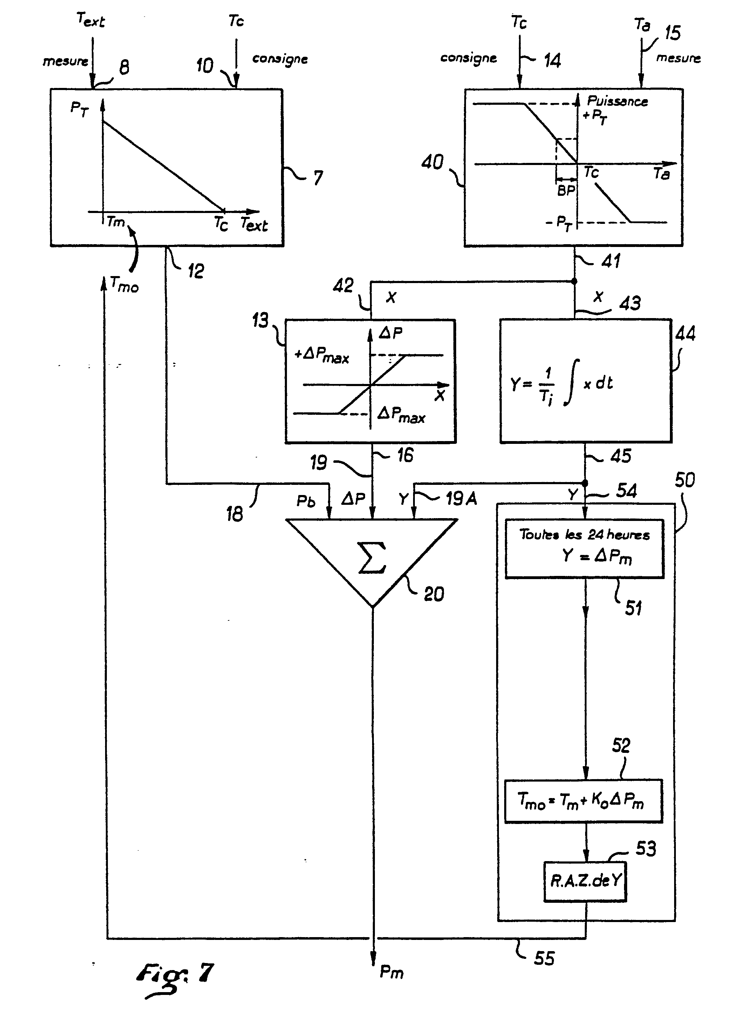

Cette disposition apparaît par exemple sur la figure 7.

Sur cette figure, les moyens 7 adaptés pour déterminer la puissance de base $P_b$ sont identiques à ceux décrits en regard de la figure 1.

Cependant, les moyens déterminant la correction à apporter a la puissance de base diffèrent de ceux décrits précédemment.

Sur la figure 7, on aperçoit un organe 40 sensible par ses entrées 14 et 15 respectivement à la température de consigne $T_c$ et à la température ambiante intérieure $T_a$. Cet organe 40 génère à sa sortie 41 un signal X représentatif de l'écart entre la température de consigne $T_c$ et la température intérieure $T_a$.

Ce signal X est appliqué à l'entrée 42 d'un régulateur proportionnel 13 d'une part, et à l'entrée 43 d'un régulateur intégrateur 44 d'autre part.

La sortie 16 du régulateur proportionnel 13, qui génère un signal représentatif de la correction proportionnelle $\Delta P$ précitée à apporter à la puissance de base $P_b$ est connectée à l'entrée 19 des moyens de sommation 20.

Le régulateur, intégrateur 44 dont la sortie 45 est reliée à l'entrée 54 d'un élément de traitement 50 réalise une intégration des écarts entre la température de consigne $T_c$ et la température intérieure $T_a$, sur une période de temps prédéterminée $T_i$, par exemple sur 24 heures, comme cela est exprimé par la relation:

$$Y = \tfrac{1}{T_i} \int X \, dt.$$

A la fin de chaque période d'intégration, par exemple toutes les 24 heures, le signal Y est assimilé à une correction auxiliaire $\Delta P_m$ (étape 51 de l'organigramme représenté dans le cadre 50).

Cette correction auxiliaire $\Delta P_m$ est utilisée pour incrémenter, dans l'élément de traitement 50, la valeur de la température $T_m$ précitée sur la base de la relation :

$T_m0 = T_m - K_o \Delta P_m$ (étape 52 de l'organigramme représenté dans le cadre 50) et ainsi modifier en conséquence la pente d'évaluation de la puissance de base $P_b$ ou, en d'autres termes, le coefficient de proportionnalité entre la puissance de base pb et l'écart entre la température de consigne $T_c$ et la température extérieure $T_{ext}$.

L'installation n'a alors plus à se soucier du réglage de $T_m$. Celui-ci est opéré automatiquement, de façon optimum, sur l'ensemble de la plage de variation de la température extérieure du lieu considéré, en minimisant la valeur de la puissance de correction moyenne $\Delta P_m$.

Le cas échéant, on peut prévoir de corriger la valeur de $T_m$ uniquement lorsque $\Delta P_m$ dépasse un seuil prédéterminé. Pour cela, il suffit de prévoir un test correspondant (non représenté) entre les étapes 51 et 52.

Par ailleurs, on notera qu'après l'étape 52, après optimisation de $T_m$, et avant de réitérer une période d'intégration, le paramètre Y est remis à zéro à l'étape 53.

La sortie 53 de l'élément 50 attaque l'entrée de réglage de $T_m$ du régulateur 7.

De plus, on notera que la sortie 45 du régulateur intégrateur 44, qui fournit une correction auxiliaire est connectée à l'entrée 19A des moyens de sommation 20 pour opérer une correction supplémentaire de la puissance requise $P_m$.

Dans la pratique, cette correction Y n'a d'intérêt que dans les premiers jours de la mise en service de l'installation de chauffage.

D'autres dispositifs complémentaires peuvent être associés au système de régulation décrit ci-dessus, et notamment une horloge électromécanique ou électronique permettant une programmation horaire journalière ou hebdomadaire de la température de consigne $T_c$ sur le dispositif de consigne 3.

Selon un mode de mise en oeuvre particulièrement simple et avantageux, deux températures de consigne peuvent ainsi être programmées, à savoir d'une part une température de consigne "confort" et d'autre part une température de consigne "réduite", l'une et l'autre affichées à la valeur souhaitée par l'usager, à tout instant, sur le dispositif de consigne 3.

Un dispositif manuel tel qu'un bouton poussoir de dérogation, placé sur l'horloge ainsi associée au dispositif 3, permet à l'utilisateur de forcer à volonté la température de consigne, introduite par le dispositif 3 dans le régulateur 6, en consigne "réduite" ou "confort", c'est-à-dire à la valeur autre que celle correspondant à la programmation à l'instant où la dérogation est demandée ; l'apparition, ensuite, d'un front de signal d'horloge demandant l'état inverse de la programmation provoque l'annulation de la dérogation.

Le mode de réalisation pratique des différents dispositifs qui viennent d'être décrits, et notamment des sondes de température 2 et 5, du dispositif de consigne 3 et de l'horloge éventuellement associée à celui-ci, des régulateurs proportionnels 7 et 13 et intégrateur 44, du dispositif de sommation 20, et des moyens de réception du signal émis par celui-ci à sa sortie 21 au niveau du système de chauffage 17 peuvent faire l'objet de nombreuses variantes, et sont du domaine des aptitudes normales de l'homme du métier.

Bien que le système de régulation qui vient d'être décrit puisse être utilisé en association avec n'importe quel système de chauffage, il se révèle particulièrement approprié pour la commande d'une chaudière de chauffage central à circulation d'eau chaude du type dit "bi-énergie", constituée d'une source de chauffage principal et d'une source de réchauffage.

A titre d'exemple non limitatif, on a illustré à la figure 6 une telle chaudière 23, comportant à titre de source de chauffage principal un brûleur de combustible liquide 22 et à titre de source de réchauffage un réchauffeur électrique 24, de puissance généralement inférieure à celle du brûleur 22 et dont la réalisation pratique est par exemple basée sur l'association de trois résistances chauffantes 25, 26, 27 ou groupes identiques de telles résistances ; on a désigné par la référence générale 28 le circuit de l'eau dans la chaudière, entre une arrivée d'eau 29 et un départ 30 reliés par des canalisations à des radiateurs à circulation d'eau chaude de type connu en soi, non représentés.

Aux possibilités déjà connues de régulation associées à ce type de chaudière, à savoir la possibilité de passage automatique d'une énergie à l'autre en fonction des périodes tarifaires du fournisseur en électricité, la possibilité de marche forcée sur une énergie ou sur l'autre par intervention manuelle, la régulation qui a été décrite ci-dessus apporte la possibilité d'adapter la puissance utilisée aux besoins et, notamment, en mode électrique, de provoquer la commande étagée de l'alimentation des trois résistances chauffantes 25, 26, 27 ou groupe de résistances chauffantes, et d'assurer le cas échéant le complément de puissance à mettre en oeuvre au moyen du brûleur 22 pour satisfaire aux besoins.

Notamment dans ce cas de mise en oeuvre de la régulation selon l'invention, pour éviter des rendements médiocres du brûleur de combustible liquide 22 et des alternances rapides de branchements et de débranchements des résistances électriques 25, 26, 27 du réchauffeur 24, le signal électrique émis par le régulateur 6 à la sortie 21 du dispositif de sommation 20, à savoir un signal continu évoluant dans le temps, est échantillonné et transformé en un signal tout ou rien dont la durée active est proportionnelle à l'amplitude de la puissance requise grâce à un circuit connu de l'homme du métier mettant en oeuvre une base de temps dont la résolution peut être fixée par exemple à une minute et la durée par exemple à 10 minutes ; alors, grâce à des moyens également connus de l'homme du métier, si le temps d'enclenchement calculé du brûleur 22 ou d'une résistance chauffante ou d'un groupe de telles résistances du réchauffeur électrique 24 doit être inférieur à trois minutes, par exemple, il n'y a pas enclenchement; s'il doit être supérieur à sept minutes, par exemple, il y a enclenchement pour toute la durée de la base de temps, c'est-a-dire dix minutes dans cet exemple; si ce temps calculé est compris entre trois et sept minutes, valeurs incluses, dans cet exemple, il y a enclenchement pour ce temps calculé.

Naturellement, cette variante de mise en oeuvre de la régulation selon invention peut également être adoptée pour tout autre système de chauffage, mettant en oeuvre une seule énergie.

Dans le cas d'un système de chauffage comportant plusieurs éléments chauffants, comme c'est le cas de la chaudière bi-énergie 23 illustrée dont les trois résistances chauffantes 25, 26, 27 et le brûleur de combustible liquide constituent quatre éléments chauffants, la commande étagée de ces éléments chauffants consiste à déterminer, à partir du signal émis par le régulateur 6 à la sortie 21 du dispositif de sommation 20, c'est-à-dire à partir de la valeur de la puissance à mettre en oeuvre calculée par le régulateur 6, le nombre maximal d'éléments (résistances 25, 26, 27 et/ou brûleur 22) à enclencher pendant toute la durée d'échantillonnage de la base de temps, et à moduler le temps d'enclenchement du dernier élément pour égaler cette puissance calculée ; une telle technique a pour effet de supprimer les problèmes d'alternance rapide de mise en service et de mise hors service des éléments chauffants, et de maintenir une puissance de chauffage de base sur toute la durée de la base de temps, et ainsi de réduire le différentiel dynamique de la régulation, ce qui procure un meilleur confort aux usagers.

On notera que le processus de régulation conforme à la présente invention réalise l'intégration des apports gratuits, joue le rôle de limiteur d'énergie, et dans la plage normale de régulation, malgré un réglage non parfaitement optimum, n'entraîne aucune sensation d'inconfort.

### Revendications

1. Procédé de régulation d'une installation de chauffage de locaux avec prise en compte à chaque instant de la température ambiante intérieure $T_a$ des locaux et de la température extérieure $T_{ext}$, caractérisé en ce qu'il comprend les étapes consistant:
i) à déterminer (7) à chaque instant la puissance de base $P_b$ à mettre en oeuvre pour compenser les déperditions présumées des locaux sur la base de la relation

$$P_b = GV (T_c - T_{ext}), \text{ dans laquelle}$$

$T_c$ représente une température de consigne, G représente le coefficient de déperdition volumique desdits locaux, et V représente le volume de ces derniers,
ii) à déterminer (13) une estimation de la correction $\Delta P$ à apporter à cette puissance de base $P_b$ pour satisfaire les besoins des locaux, c'est-à-dire pour amener la température intérieure $T_a$ au moins sensiblement à la température de consigne $T_c$, sur la base de la relation

$$\Delta P = K (T_c - T_a), \text{ dans laquelle}$$

K représente une constante et $T_c$ représente ladite valeur de consigne,
iii) à générer (20) un signal de commande représentatif de la somme algébrique ($P_m = P_b + \Delta P$) de la puissance de base et de ladite correction, et
iv) à commander l'installation de chauffage (17) à l'aide du signal de commande pour imposer à celle-ci a fourniture aux locaux, d'une puissance égale à ladite somme algébrique.

2. Procédé de régulation, selon la revendication 1, caractérisé par le fait que la correction $\Delta P$, en valeur absolue, est limitée à un maximum prédéterminée $\Delta P_{max}$.

3. Procédé de régulation selon l'une des revendications 1 et 2, caractérisé par le fait que la valeur de la température extérieure pour laquelle la puissance de base $P_b$ maximale, correspondant à la puissance totale de l'installation de chauffage, est imposée afin de maintenir la température de consigne $T_c$ à l'intérieur des locaux, et par le fait même le coefficient de proportionnalité utilisé pour déterminer la puissance de base $P_b$ requise, est incrémentée périodiquement proportionnellement à une intégration, sur une période prédéterminée, de l'écart ($T_c - T_a$) existant entre la température de consigne $T_c$ et la température $T_a$ intérieure aux locaux.

4. Procédé de régulation selon l'une des revendications 1 à 3, caractérisé par le fait que le signal $P_m$ de commande appliqué à l'installation de chauffage et représentatif de la puissance de chauffage requise est en outre corrigé (44) par une correction auxiliaire

$$(Y = \tfrac{1}{T_i} \int (T_c - T_a) \, dt)$$

proportionnelle à l'intégration, sur une période prédéterminée $T_i$, de l'écart ($T_c - T_a$) existant entre la température de consigne et la température intérieure aux locaux.

5. Procédé de régulation selon l'une des revendications 1 à 4, caractérisé par le fait que la température de consigne $T_c$ est modulée automatiquement en fonction d'une programmation horaire.

6. Procédé de régulation selon l'une des revendications 1 à 5, caractérisé par le fait que le signal de commande $P_m$ évoluant en permanence en fonction des températures extérieure $T_{ext}$ et intérieure $T_a$ instantanées est échantillonné avant d'être appliqué à l'installation de chauffage.

7. Procédé de régulation selon la revendication 6, caractérisé par le fait que pour chaque période d'échantillonnage le signal de commande $P_m$ est transformé en un signal de commande auxiliaire tout ou rien dont la durée active est proportionnelle à l'amplitude du signal de commande, ledit signal de commande auxiliaré étant appliqué à l'installation de chauffage.

8. Procédé de régulation selon l'une des revendications 6 et 7, pour la régulation d'une installation de chauffage comportant plusieurs générateurs de chauffage élémentaires (25, 26, 27, 22), caractérisé par le fait qu'il consiste à pratiquer une commande étagée de ces générateurs élémentaires en déterminant à partir du signal de commande $P_m$ le nombre maximal de générateurs à mettre en service pendant une période d'échantillonnage donnée et en modulent le temps de mise en service du dernier générateur pour égaler la puissance requise instantanée.

9. Dispositif pour la mise en oeuvre du procédé selon l'une quelconque des revendications précédentes, comportant une sonde de température ambiante intérieure et une sonde de température extérieure, caractérisé en ce qu'il comporte:

a) un dispositif de consigne (3), pour l'affichage à volonté d'au moins une température de consigne $T_c$, ce dispositif de consigne (3) présentant au moins une sortie (11) et émettant à cette sortie (11) un signal représentatif de la température de consigne $T_c$,

b) un premier régulateur proportionnel (7) présentant deux entrées dont l'une (10) est reliée à la sortie (11) du dispositif de consigne (3) et dont l'autre (8) est reliée à la sortie (9) de la sonde de température extérieure (5) pour recevoir de celle-ci, en continu, un signal représentatif de la température extérieure $T_{ext}$ instantanée, et une sortie (12) par laquelle il émet un signal $P_b$ représentatif de la puissance de base à mettre en oeuvre pour combattre les déperditions présumées du local, selon l'équation:

$$P_b = GV (T_c - T_{ext})$$

où
$P_b$ = puissance de base en W
$G$ = coefficient de déperdition volumique du logement en W/°C m³
$V$ = volume du local en m³
$T_c$ = température intérieure de consigne en °C
$T_{ext}$ température extérieure mesurée en °C,

c) un deuxième régulateur proportionnel (13), sensible à la sortie (11) du dispositif de consigne (3) et à la sortie (36) de la sonde de température intérieure (2), pour recevoir en continu de cette dernière un signal représentatif de la température intérieure $T_a$ à chaque instant, et possédant une sortie (16) à laquelle il émet un signal représentatif de la correction $\Delta P$ à apporter à la puissance de base $P_b$ pour ajuster la puissance de chauffage à mettre en oeuvre $P_m$ pour satisfaire les besoins des locaux, selon l'équation

$$\Delta P = K (T_c - T_a,$$

dans laquelle
$K$ = gain du régulateur en W/°C,

d) des moyens de sommation (20) attaqués par la sortie (12) du premier régulateur proportionnel (7) et la sortie (16) du deuxième régulateur proportionnel (13), pour émettre en sortie (21) un signal de commande représentatif de la somme algébrique:

$$P_m = P_b + \Delta P \text{ et}$$

e) des moyens de liaison adaptés pour appliquer le signal de commandé à l'installation de chauffage (17) pour imposer à celle-ci la fourniture aux locaux d'une puissance égale à ladite somme algébrique.

10. Dispositif selon la revendication 9, caractérisé en ce que le deuxième régulateur proportionnel (13) comporte des moyens pour limiter en valeur absolue la correction $\Delta P$ à un maximum $\Delta P_{max}$, pour émettre à sa sortie (16) un signal

$$\Delta P = X (T_c - T_a)$$

avec

$$\Delta P = \Delta P_{max} \text{ si } |\Delta P| \geqslant |\Delta P_{max}|$$

$\Delta AP_{max}$ = correction maximale en plus ou moins apportée à la puissance de base en Watts
$BP$ = bande proportionnelle du régulateur en °C
$K = \frac{\Delta P_{max}}{BP}$ = gain du régulateur en W/°C

11. Dispositif selon l'une des revendications 9 et 10, caractérisé en ce qu'au dispositif de consigne (3) est associée une horloge faisant évoluer la température de consigne $T_c$ entre des valeurs prédéterminées, en fonction d'une programmation.

12. Dispositif selon l'une des revendications 9 à 11, caractérisé en ce qu'il comporte des moyens de réglage automatique de sa caractéristique de régulation.

13. Dispositif selon l'une des revendications 9 à 12, caractérisé par le fait qu'il comprend des moyens pour incrémenter périodiquement et proportionnellement à une intégration, sur une période prédéterminée, de l'écart $(T_c - T_a)$ existant entre la température de consigne $T_c$ et la température $T_a$ intérieure aux locaux, la valeur de la température extérieure pour laquelle la puissance de base $P_b$ maximale, correspondant à la puissance totale de l'installation de chauffage, est imposée afin de maintenir la température de consigne $T_c$ à l'intérieur des locaux, et par le fait même le coefficient de proportionnalité utilisé pour déterminer la puissance de base requise.

14. Dispositif selon l'une des revendications 9 à 13, caractérisé par le fait qu'il comprend des moyens pour corriger par une correction auxiliaire

$$(Y = \frac{1}{T_i} \int (T_c - T_a) \, dt)$$

proportionnelle à l'intégration sur une période prédéterminée $T_i$ de l'écart $(T_c - T_a)$ existant entre la température de consigne $T_c$ et la température intérieure $T_a$ aux locaux, le signal $P_m$ de commande appliqué à l'installation de chauffage et représentatif de la puissance de chauffage requise.

15. Dispositif selon l'une des revendications 9 à 14, caractérisé par le fait qu'il comprend des moyens pour échantillonner le signal de commande $P_m$ évoluant en permanence en fonction des températures extérieure $T_{ext}$ et intérieure $T_a$.

16. Dispositif selon la revendication 15, caractérisé par le fait qu'il comprend des moyens qui pour chaque période d'échantillonnage transforment le signal de commande pm en un signal de commande auxiliaire tout ou rien dont la durée active est proportionnelle à l'amplitude du signal de commande et des moyens pour appliquer ledit signal de commande auxiliaire à l'installation de chauffage.

## Patentansprüche

1. Verfahren zum Regeln einer Raumheizung mit Mitteln zum fortwährenden Erfassen der Innentemperatur $T_a$ von Räumen und der Außentemperatur $T_{ext}$, gekennzeichnet durch folgende Schritte:
i) fortwährendes Bestimmen (7) der zum Ausgleich der erwarteten Verluste in den Räumen einzubringenden Grundleistung

$$P_b = G \cdot V \cdot (T_c - T_{ext}) \text{ wobei mit}$$

$T_c$ eine Solltemperatur, mit G der Volumenverlustkoeffizient der Räume und mit V das Volumen der Räume bezeichnet sind,
ii) Bestimmen (13) einer Abschätzung eines Korrektursummanden $\Delta P$, welcher der Grundleistung $P_b$ zuzuschlagen ist, um den Erfordernissen der Räume gerecht zu werden, d.h. um die Innentemperatur $T_a$ zumindest in etwa der Solltemperatur $T_c$ anzugleichen, wobei die Gleichung

$$\Delta P = K \cdot (T_c - T_a) \text{ gilt, in der}$$

K eine Konstante und $T_c$ den genannten Sollwert darstellen,
iii) Erzeugen (20) eines Steuersignals, das der algebraischen Summe ($P_m = P_b + \Delta P$) aus der Grundleistung und dem Korrektursummanden entspricht, und
iv) Steuern der Raumheizung (17) mit Hilfe des Steuersignals derart, daß diese den erforderlichen Heizbedarf entsprechend der genannten Summe an die Räume abgibt.

2. Verfahren nach Anspruch 1, dadurch gekennzeichnet, daß der Betrag des Korrektursummanden $\Delta P$ maximal einen Vorbestimmten Wert $\Delta P_{max}$ annimmt,

3. Verfahren nach Anspruch 1 oder 2, dadurch gekennzeichnet, daß der Wert der Außentemperatur, für die die maximale, der Gesamtleistung der Raumheizung entsprechende Grundleistung $P_b$ abgegeben wird, um die Solltemperatur $T_c$ Inneren dem Raume zu halten, und der Proportionalkoeffizient, der zum Bestimmen der erforderlichen Grundleistung $P_b$ verwendet wird, Periodisch proportional der Integration der Differenz ($T_c - T_a$) zwischen der Solltemperatur $T_c$ und der Innentemperatur der Räume $T_a$ über eine vorbestimmte Zeitspanne erhöht werden.

4. Verfahren nach einem der Ansprüche 1 bis 3, dadurch gekennzeichnet, daß das Steuersignal $P_m$, das an die Raumheizung gegeben wird und der erforderlichen Heizleistung entspricht, ferner mit einer dem Integral

$$(Y = \tfrac{1}{t} \int (T_c - T_a) \, dt)$$

der Differenz zwischen der Solltemperatur und der Innentemperatur der Räume über eine vorbestimmte Zeitspanne $T_i$ proportionalen Hilfskorrektur korrigiert (44) wird.

5. Verfahren nach einem der Ansprüche 1 bis 4, dadurch gekennzeichnet, daß die Solltemperatur ($T_c$) automatisch mit einem Zeitprogramm moduliert wird.

6. Verfahren nach einem der Ansprüche 1 bis 5, dadurch gekennzeichnet, daß das durchgehend entsprechend der jeweils aktuellen Außentemperatur $T_{ext}$ und der jeweils aktuellen Innentemperatur $T_a$ schwankende Steuersignal $P_m$ abgetastet wird, bevor es der Raumheizung Zugeführt wird.

7. Verfahren nach Anspruch 6, dadurch gekennzeichnet, daß das Steuersignal $P_m$ bei jedem Abtastvorgang in ein Pulsierendes Hilfssteuersignal gewandelt wird, dessen Impulsdauer der Amplitude des Steuersignals proportional ist, und das Hilfssteuersignal der Raumheizung zugeführt wird.

8. Verfahren nach Anspruch 6 oder 7 zum Regeln einer Raumheizung, die mehrere Heizelemente (25, 26, 27, 22) umfaßt, dadurch gekennzeichnet, daß zum Ausführen einer mehrstufigen Steuerung der Heizelemente zu Beginn des Steuersignals $P_m$ die maximale Anzahl der während einer gegebenen Abtastperiode zu betreibenden Heizelemente bestimmt und die Betriebszeit des zuletzt betriebenen Heizelements moduliert werden, um die momentan erforderliche Leistung anzugleichen.

9. Einrichtung zum Ausführen des Verfahrens nach einem der vorangehenden Ansprüche mit einem Fühler für die Innentemperatur und einem Fühler für die Außentemperatur, gekennzeichnet durch:
a) eine Sollwertvorgabevorrichtung (3) zum willkürlichen Vorgeben mindestens einer Solltemperatur $T_c$, wobei die Sollwertvorgabevorrichtung (3) mindestens einen Ausgang (11) umfaßt, an dem sie ein der Solltemperatur $T_c$ entsprechendes Signal abgibt,
b) einen ersten Proportionalregler (7) mit zwei Eingängen, von denen der eine (10) an den Ausgang (11) der Sollwertvorgabevorrichtung (3) und der andere (8) an den Ausgang (9) des Temperaturfühlers (5) für die Außentemperatur angeschlossen ist, um von diesem fortwährend ein der aktuellen Außentemperatur $T_{ext}$ entsprechendes Signal empfangen zu können, und mit einem Ausgang (12), an dem ein der einzubringenden Grundleistung entsprechendes Signal $P_b$ abgegeben wird, um die erwarteten Verluste in den Räumen auszugleichen, wobei die folgende Gleichung gilt:

$$P_b = G \cdot V \cdot (T_c - T_{ext})$$

mit

$P_b$ = Grundleistung in W
$G$ = Volumenverlustkoefizient der Räume in W/°C m³
$V$ = Volumen der Raume in m³
$T_c$ = Soll- Innentemperatur in °C
$T_{ext}$ = gemessene Außentemperatur in °C,

c) einen zweiten Proportionalregler (13), der auf das Ausgangssignal (11) der Sollwertvorgabevorrichtung (3) und das Ausgangssignal (36) des Innentemperaturfühlers (2) reagiert, um fortwährend von letzterem ein der Innentemperatur $T_a$ entsprechendes Signal zu empfangen, und der einen Ausgang (16) aufweist, an dem er ein einem Korrektursummanden $\Delta P$ entsprechendes Signal abgibt, das der Grundleistung $P_b$ zuzuschlagen ist, um die den Raumerfordernissen entsprechende einzubringende Heizleistung $P_m$ einzustellen, wobei die folgende Gleichung gilt:

$$\Delta P = K \cdot (T_c - T_a),$$

mit

$K$ = Verstärkung des Reglers in W/°C,

d) an den Ausgang (12) des ersten Proportionalreglers (7) und den Ausgang (16) des zweiten Proportionalreglers (13) angeschlossene Addiermittel (20), die an ihrem Ausgang (21) ein Signal abgeben, das der Summe:

$$P_m = P_b + \Delta P$$

entspricht, und
e) Verbindungsmittel zum Abgeben des Steuersignals an die Heizung (17) derart, daß diese den erforderlichen Neizbedarf entsprechend der genannten Summe an die Räume abgibt.

10. Einrichtung nach Anspruch 9, dadurch gekennzeichnet, daß der zweite Proportionalregler (13) Mittel zum Begrenzen des Betrages des Korrektursummanden $\Delta P$ auf einen Maximalwert $\Delta P_{max}$ umfaßt, so daß an seinem Ausgang (16) ein Signal

$$\Delta P = K \cdot (T_c - T_a) \text{ für } |\Delta| < |\Delta P_{max}|$$

und

$$\Delta P = \Delta P_{max} \text{ für } |\Delta P| \geqslant |\Delta P_{max}|$$
mit

$\Delta P_{max}$ = maximaler Korrektursummand, der der Basisleistung zugeschlagen wird, in W
$BP$ = Bandbreite des Proportionalreglers in °C
$K = \frac{\Delta P_{max}}{BP}$ = Verstärkungsfaktor des Reglers in W/°C,
abgegeben wird.

11. Einrichtung nach Anspruch 9 oder 10. dadurch gekennzeichnet, daß die Sollwertvorgabevorrichtung (3) mit einem Taktgeber verbunden ist, der die Solltemperatur $T_c$ mittels eines Programmes zwischen vorbestimmten Werten schwanken läßt.

12. Einrichtung nach einem der Ansprüche 9 bis 11, gekennzeichnet durch automatische Regelungsmittel mit entsprechender Charakteristik.

13. Einrichtung nach einem der Ansprüche 9 bis 12, gekennzeichnet durch Mittel zum Erhöhen des Wertes der Außentemperatur, für welche die maximale, der Gesamtleistung der Heizung entsprechende Grundleistung $P_b$ abgegeben wird um die Solltemperatur $T_c$ im Inneren der Raume zu halten, wobei die Erhöhung periodisch und proportional der Integration der Differenz $(T_c - T_a)$ zwischen der Solltemperatur $T_c$ und der Innentemperatur $T_a$ der Räume über eine vorbestimmte Zeitspanne erfolgt, und zum entsprechenden Erhöhen des Proportionalkoeffizienten, der zum Festlegen der erforderlichen Grundleistung verwendet wird.

14. Einrichtung nach einem der Ansprüche 9 bis 13, gekennzeichnet durch Mittel zum Korrigieren des an die Heizung gegebenen, der erforderlichen Heizleistung entsprechenden Steuersignals $P_m$ mittels einer Hilfskorrektur

$$(Y = \tfrac{1}{T_i} \int (T_c - T_a) \, dt),$$

die dem Integral der Differenz $(T_c - T_a)$ zwischen der Solltemperatur $T_c$ und der Innentemperatur $T_a$ der Räume über eine vorbestimmte Periode $T_i$ proportional ist.

15. Einrichtung nach einem der Ansprüche 9 bis 14, gekennzeichnet durch Mittel zum Abtasten des Steuersignals $P_m$, das fortwährend entsprechend der Außentemperatur $T_{ext}$ und der Innentemperatur $T_a$ schwankt.

16. Einrichtung nach Anspruch 15, gekennzeichnet durch Wandlungsmittel, welche das Steuersignal $P_m$ bei jedem Abtastvorgang in ein pulsierendes Hilfssteuersignal wandeln, dessen Impulsdauer der Amplitude des Steuersignals proportional ist, und durch Mittel zum Abgeben des genannten Hilfssteuersignals an die Heizung.

**Claims**

1. Method for regulating a space heating installation taking into account, at each instant, the internal ambient temperature $T_a$ of the rooms and the external temperature $T_{ext}$, characterised in that it comprises the stages consisting:

i) of determining (7) at each instant the basic power $P_b$ to be used for compensating for presumed losses of the rooms on the basis of the relationship

$$P_b = GV (T_c - T_{ext}), \text{ in which}$$

$T_c$ represents a reference temperature, G represents the coefficient of volumetric loss of the said rooms and V represents the volume of the latter,

ii) of determining (13) an estimation of the correction $\Delta P$ to be applied to this basic power $P_b$ in order to satisfy the needs of the rooms, i.e. in order to bring the internal temperature $T_a$ at least substantially to the reference temperature $T_c$, on the basis of the relationship

$$\Delta P = K (T_c - T_a),$$

in which K represents a constant and $T_c$ represents the said reference value,

iii) of generating (20) a control signal representative of the algebraic sum ($P_m = P_b + \Delta P$) of the basic power and of the said correction, and

iv) of controlling the heating installation (17) by means of the control signal in order to cause the latter to supply the rooms with a power equal to the said algebraic sum.

2. Regulating method according to claim 1, characterised by the fact that the correction $\Delta P$, of absolute value, is limited to a predetermined maximum $\Delta P_{max}$.

3. Regulating method according to one of claims 1 and 2, characterised by the fact that the value of the external temperature for which the maximum basic power $P_b$, corresponding to the total power of the heating installation, is imposed in order to maintain the reference temperature $T_c$ inside the rooms and in fact even the coefficient of proportiontality used for determining the basic power $P_b$ required, is incremented periodically in proportion to an integration, over a predetermined period, of the difference ($T_c - T_a$) existing between the reference temperature $T_c$ and the temperature $T_a$ inside the rooms.

4. Regulating method according to one of claims 1 to 3, characterised by the fact that the control signal pm applied to the heating installation and representative of the heating power required is also corrected (44) by an auxiliary correction

$$(Y = \tfrac{1}{T_i} \int T_c - T_a) \, dt)$$

proportional to the integration, over a predetermined period $T_i$, of the difference ($T_c - T_a$) existing between the reference temperature and the temperature inside the rooms.

5. Regulating method according to one of claims 1 to 4, characterised by the fact that the reference temperature $T_c$ is modulated automatically as a function of an hourly programming.

6. Regulating method according to one of claims 1 to 5, characterised by the fact that the control signal $P_m$ evolving permanently as a function of the instantaneous external temperature $T_{ext}$ and internal temperature $T_a$ is sampled before being applied to the heating installation.

7. Regulating method according to claim 6, characterised by the fact that for each sampling period, the control signal pm is transformed into an all or nothing auxiliary control signal whereof the active duration is proportional to the amplitude of the control signal, the said auxiliary control signal being applied to the heating installation.

8. Regulating method according to one of claims 6 and 7, for regulating a heating installation comprising several basic heating boilers (25, 26, 27, 22), characterised by the fact that it consists of using a control by stages of these basic boilers by determining from the control signal $P_m$ the maximum number of boilers to be put into operation during a given sampling period and by modulating the operating time of the last boiler in order to equal the instantaneous required power.

9. Device for carrying out the method according to one of the preceding claims, comprising an internal, ambient temperature probe and an external temperature probe, characterised in that it comprises:

a) a reference device (3), for displaying at will at least one reference temperature $T_c$, this reference device (3) comprising at least one output (11) and emitting at this output (11) a signal representative of the reference temperature $T_c$,

b) a first proportional regulator (7) comprising two inputs, whereof one (10) is connected to the output (11) of the reference device (3) and whereof the other (8) is connected to the output (9) of the external temperature probe (5) in order to receive from the latter, continuously, a signal representative of the instantaneous external temperature $T_{ext}$ and an output (12) by which it emits a signal $P_b$ representative of the basic power to be used to overcome the assumed losses of the room, according to the equation:

$$P_b = GV (T_c - T_{ext})$$

in which

$P_b$ = basic power in W
$G$ = coefficient of volumetric loss of the room in W/°C m³
$V$ = volume of the room in m³
$T_c$ = internal reference temperature in °C
$T_{ext}$ = external temperature measured in °C,

c) a second proportional regulator (13), sensitive to the output (11) of the reference device (3) and to the output (36) of the internal temperature probe (2), in order to receive continuously from the latter a signal representative of the internal temperature $T_a$ at each instant and having an output (16) at which it emits a signal representative of the correction $\Delta P$ to be applied to the basic power $P_b$ in order to adjust the heating power to be used pm in order to satisfy the requirements of the rooms, accoruing to the equation:

$$P = K (T_c - T_a)$$

in which
K = gain of the regulator in W/°C,

d) adding means (20) connected to the output (12) of the first proportional regulator (7) and the output (16) of the second proportional regulator (13), in order to emit at the output (21), a control signal representative of the algebraic sum:

$$P_m = P_b + \Delta P \text{ and}$$

e) connection means adapted to apply the control signal to the heating installation (17) in order to cause the latter to supply the rooms with a power equal to the said algebraic sum.

10. Device according to claim 9, characterised in that the second proportional regulator (13) comprises means for limiting, in absolute value, the correction $\Delta P$ to a maximum $\Delta P_{max}$, in order to emit at its output (16), a signal

$$\Delta P = K (T_c - T_a)$$

with $\Delta P = \Delta P_{max}$ if $|\Delta P| > |\Delta P_{max}|$

$\Delta P_{max}$ = positive or regative maximum correction applied to the basic power in Watts
 BP proportional band of the regulator in °C
 $K = \frac{\Delta P_{max}}{BP}$ = gain of the regulator in W/°C.

11. Device according to one of claims 9 and 10, characterised in that associated with the reference device (3) is a clock causing the reference temperature $T_c$ to evolve between predetermined values, as a function of programming.

12. Device according to one of claims 9 to 11, characterised in that it comprises means for the automatic regulation of its regulation characteristic.

13. Device according to one of claims 9 to 12, characterised by the fact that it comprises means for incrementing periodically and in proportion to an integration, over a predetermined period, the difference $(T_c - T_a)$ existing between the reference temperature $T_c$ and the temperature $T_a$ inside the rooms, the value of the external temperature for which the maximum basic power $P_b$, corresponding to the total power of the heating installation, is imposed in order to maintain the reference temperature $T_c$ inside the rooms and in fact even the coefficient of proportionality used for determining the basic power required.

14. Device according to one of claims 9 to 13, characterised by the fact that it comprises means for correcting by an auxiliary correction
 $> r (Y = \frac{1}{t_i} \int (T_c - T_a) \, dt)$

proportional to the integration over a predetermined period $T_i$ of the difference ($T_c - T_a$) existing between the reference temperature $T_c$ and the temperature $T_a$ inside the rooms, the control signal $P_m$ applied to the heating installation and representative of the heating power required.

15. Device according to one of claims 9 to 14, characterised by the fact that it comprises means for sampling the control signal $P_m$ evolving permanently as a function of the external temperature $T_{ext}$ and internal temperature $T_a$.

16. Device according to claim 15, characterised by the fact that it comprises means which for each sampling period transform the control signal pm into an all or nothing auxiliary control signal whereof the active duration is proportional to the amplitude of the control signal and means for applying the said auxiliary control signal to the heating installation.

*Fig:1*

PUISSANCE DE BASE (W)

*Fig:2*

Tm                Text                Tc    TEMPÉRATURE
                                            EXTERIEURE
                                            (°C)

PUISSANCE DE CORRECTION (W)

*Fig:3*

TEMPÉRATURE
AMBIANTE
(°C)

Fig. 4

PUISSANCE MISE EN OEUVRE (W)

$\Delta P_{MAX}$
$P_T$
$\Delta P_{MAX}$

C

B

A

$T_m$        $T_{ext}$        $T_c$        TEMPÉRATURE EXTERIEURE (°C)

D

Fig. 5

PUISSANCE MISE EN OEUVRE (W)

$P_T$

$B_1$

$B_2$

$T_{m2}$        $T_{m1}$        $T_{c2}$        $T_{c1}$        TEMPÉRATURE EXTERIEURE (°C)

Fig. 6

28

29

25    26    27

24

30

22

23

3

**Fig. 7**

$P_m$